# EUROPEAN PATENT SPECIFICATION

(11) **EP 2 826 643 B1**
(45) Date of publication and mention of the grant of the patent: **08.08.2018**
(21) Application number: 13761466.5
(22) Date of filing: 13.03.2013
(51) Int. Cl.: B60C 15/00, B60C 13/00, B60C 15/06

(54) **TIRE**
REIFEN
PNEUMATIQUE

(30) Priority: 14.03.2012 JP 2012056964
(43) Date of publication of application: 21.01.2015
(73) Proprietor: Bridgestone Corporation, Tokyo 104-8340 (JP)
(72) Inventor: SHIMAMURA, Naoki, Tokyo 187-8531 (JP)
(74) Representative: Oxley, Robin John George
(86) International application number: PCT/JP2013/057065
(87) International publication number: WO 2013/137340

(56) References cited:
- EP-A1- 2 465 710
- JP-A- S61 143 207
- JP-A- S61 222 801
- JP-A- 2001 071 719
- JP-A- 2001 138 708
- JP-A- 2003 191 723
- JP-A- 2007 045 361
- JP-A- 2008 155 728

## Description

### TECHNICAL FIELD

The present invention relates to a tire including a pair of bead cores and a carcass layer having a toroidal shape laid between the pair of bead cores.

### BACKGROUND ART

One of conventionally-known tires includes: a pair of bead cores; a bead filler extending from each of the bead cores in the tire radial direction; a carcass layer having a toroidal shape laid between the pair of bead cores; and a rubber chafer which comes into contact with a rim flange (see Patent Literature 1, for example).

In recent years, because of growing environmental concerns, there is a need for so-called resource saving, reducing the amount of materials used in a tire. This can reduce the consumption of raw materials and can reduce the rolling resistance since the weight of the tire is reduced.

For the purpose of resource saving, in some tires, the bead filler is shortened in length in the tire radial direction, and the folded-back portion of the carcass layer at each bead core is shortened. This type of tire can save resources but has low strength in the outside of the portion which comes into contact with the rim flange in the tire radial direction. Accordingly, the carcass cord included in the carcass layer is more likely to break, that is, so-called pinch cut is more likely to occur.

The rubber chafer is provided so as to protrude outward in the tire radial direction from the portion at which the tire comes into contact with the rim flange. This can reinforce the strength of the bead portion and thereby reduce occurrences of pinch cut.

However, even if the rubber chafer is provided so as to protrude from outward from the portion at which the tire comes into contact with the rim flange, the occurrences of pinch cut cannot be sufficiently reduced. There is a need for further improvement.

Moreover, when the folded-back portion of the carcass layer at each bead core is shortened in length, the end of the carcass layer is located at the portion where the tire comes into contact with the rim flange. The portion at which the tire comes into contact with the rim flange is subject to stain concentration. This is more likely to cause separation starting from the end of the carcass layer.

### Citation List

### Patent Literature

Patent Literature 1: Japanese Patent Laid-open Publication No. 2008-285010. Attention is also drawn to the disclosure of EP 2,465,710.

### SUMMARY OF INVENTION

In order to solve the aforementioned problems, the preset invention includes the following aspects. An aspect of the present invention there is provided a tire/rim assembly, as claimed in claim 1.

The soft rubber member may be positioned between the outer end of the bead filler in the tire radial direction and the rim flange ridge.

The soft rubber member may have a 100% modulus not more than one third of that of the rubber chafer.

An outer end of the soft rubber member in the tire radial direction is positioned to the inside of the rim flange ridge in the tire radial direction while an inner end of the soft rubber member in the tire radial direction is positioned to the outside in the tire radial direction, of the outer end of the bead filler in the tire radial direction.

The tire may further include a sidewall portion forming a side face of the tire, in which the sidewall portion may have a thickness of not more than 2.5 mm at a tire maximum width position in the tread width direction.

### BRIEF DESCRIPTION OF DRAWINGS

Fig. 1 is a cross-sectional view of a tire 1 according to an embodiment in a tire radial direction trd and a tread width direction twd.
Fig. 2 is an enlarged view of a bead portion 3 in Fig. 1.
Fig. 3 is an explanatory view illustrating the state where the tire 1 is driven over a curb 500.
Fig. 4 is a cross-sectional view of a tire according to Comparative Example 1 in the tire radial direction trd and tread width direction twd.
Fig. 5 is a cross-sectional view of a tire according to Comparative Example 2 in the tire radial direction trd and tread width direction twd.

### MODE FOR CARRYING OUT INVENTION

A description is given of an example of a tire according to the present invention with reference to the drawings. Specifically, (1) Schematic Configuration of Tire 1, (2) Operational Effects, (3) Comparative Evaluation, and (4) Other Embodiments are described.

In the following description of the drawings, same or similar portions are given same or similar reference numerals. The drawings are schematic, and it should be noted that the dimensional proportions are different from real ones. Accordingly, specific dimensions and the like should be determined with reference to the following description. It is certain that some portions have different dimensional relations and proportions between the drawings.

### (1) Schematic Configuration of Tire 1

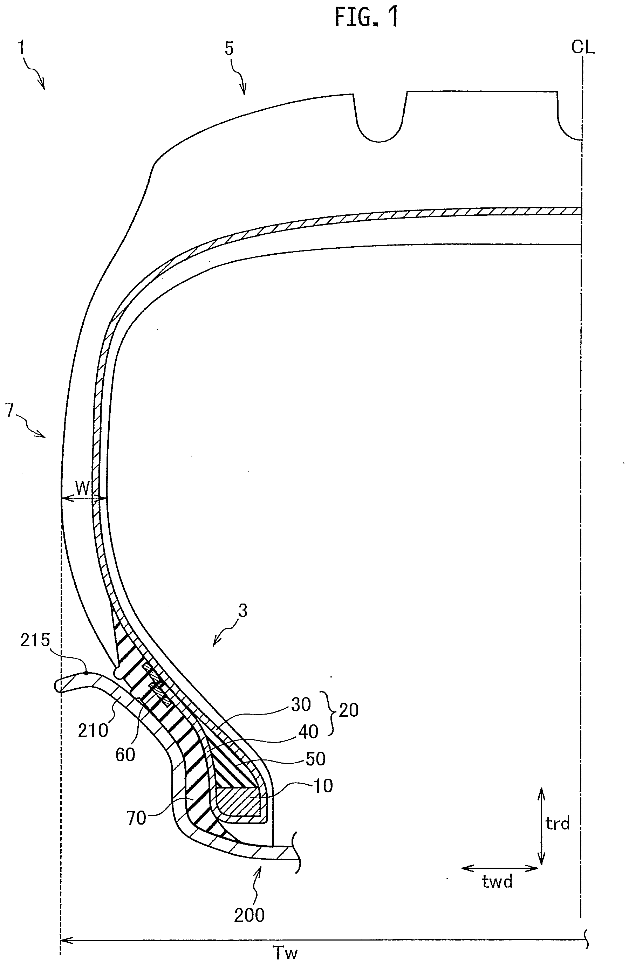

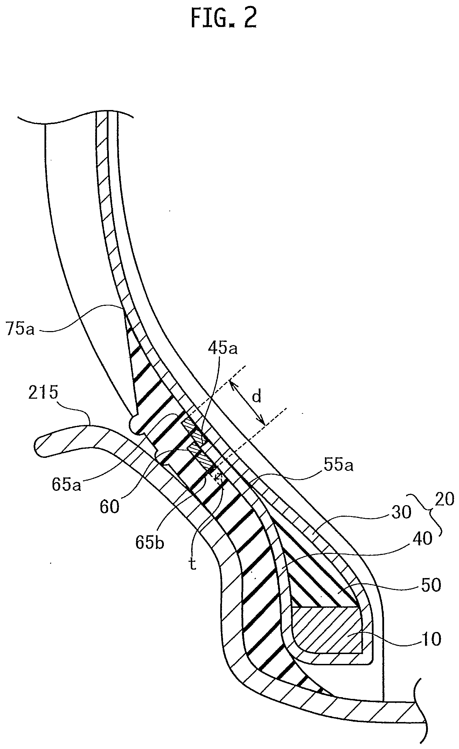

The schematic configuration of the tire 1 according to the embodiment is described with reference to Figs. 1 and 2. Fig. 1 is a cross-sectional view of the tire 1 according to the embodiment along a tire radial direction trd and a tread width direction twd. Fig. 2 is an enlarged view of a bead portion 3 of Fig. 1.

The tire 1 is assembled to a rim 200 which is a normal rim. The tire 1 has a normal internal pressure and is subjected to normal load. The rim 200 is provided with a rim flange 210. The rim flange 210 supports the bead portion 3 in the tread width direction twd. The rim flange 210 includes a rim flange ridge 215 positioned at the outermost position in the tire radial direction trd.

The normal rim refers to a standard rim of applied size which is specified in Year Book 2008 of JATMA (Japan Automobile Tire Manufactures Association). The normal rim also refers to a standard rim of applied size described in later-described standards in regions outside of Japan.

The normal internal pressure is a pneumatic pressure specified by the tire measurement method (pp. 0-3, 5) in Year Book 2008 of JATMA (Japan Automobile Tire Manufactures Association). The normal internal pressure is a pneumatic pressure corresponding to a pneumatic pressure at tire size measurement which is described in the later-described standards in regions outside of Japan.

The normal load is a load corresponding to the maximum load capacity for a single wheel in Year Book 2008 of JATMA (Japan Automobile Tire Manufactures Association) . The normal load is a maximum load (a maximum load capacity) for a single wheel of applied size described in the later-described standards in regions outside of Japan.

The standards are specified by industrial standards effective in the regions where the tires are manufactured or used. For example, the standards are specified by "Year Book of The Tire and Rim Association Inc." in the United States and by "Standards Manual of the European Tire and Rim Technical Organization" in Europe.

As illustrated in Fig. 1, the tire 1 includes the bead portion 3, a tread portion 5, and a sidewall portion 7.

The bead portion 3 includes a bead core 10. The bead portion 3 comes into contact with the rim 200. The tread portion 5 includes a tread surface which comes into contact with the road surface. The sidewall portion 7 forms a side face of the tire 1. The sidewall portion 7 connects the tread portion 5 and the bead portion 3. The maximum width of the tire 1 in the tread width direction twd is referred to as a tire maximum width TW. The tire maximum width TW is provided at the sidewall portion 7. Preferably, the thickness of the sidewall portion 7 is not more than 2.5 mm at the position of the tire maximum width TW.

The tire 1 includes the pair of bead cores 10, a carcass layer 20, a bead filler 50, a soft rubber member 60, and a rubber chafer 70.

The bead cores 10 are included in the respective bead portions 3. Each bead core 10 is composed of bead wire (not shown). The outer end of the bead core 10 in the tire radial direction trd is in contact with the bead filler 50.

The carcass layer 20 constitutes the frame of the tire 1. The carcass layer 20 is positioned from the tread portion 5 through the sidewall portion 7 to the bead portion 3.

The carcass layer 20 has a toroidal shape laid between the pair of bead cores 10. The carcass layer 20 envelops the bead cores 10 and the bead filler 50 in this embodiment. The carcass layer 20 is in contact with the bead cores 10 and bead filler 50. The carcass layer 20 includes a carcass body portion 30 and carcass folded-back portions 40.

The carcass body portion 30 is laid between the pair of bead cores 10. The carcass body portion 30 is therefore positioned from the tread portion 5 through the sidewall portion 7 to the bead portion 3. The carcass folded-back portions 40 are turned back outward in the tread width direction twd around the pair of bead cores 10. Each carcass folded-back portion 40 includes a carcass outer end 45a which is the outer end thereof in the tire radial direction trd. The carcass outer end 45a is in contact with the carcass body portion 30.

The bead filler 50 enhances the rigidity of the bead portion 3. The bead filler 50 extends from the bead core 10 in the tire radial direction trd. The bead filler 50 is positioned between the carcass body portion 30 and the carcass folded-back portion 40 and is also positioned to the outside of the bead core 10 in the tire radial direction trd. The bead filler 50 includes a bead filler outer end 55a which is the outer end thereof in the tire radial direction trd. The thickness of the bead filler 50 is reduced toward the bead filler outer end 55a.

The soft rubber member 60 is positioned between the carcass outer end 45a and the rubber chafer 70. Accordingly, the soft rubber member 60 overlaps the carcass outer end 45a in the tread width direction twd. The soft rubber member 60 is in contact with the carcass outer end 45a and the rubber chafer 70.

The soft rubber member 60 includes: a soft rubber outer end 65a which is the outer end thereof in the tire radial direction trd; and a soft rubber inner end 65b which is the inner end thereof in the tire radial direction trd.

The soft rubber member 60 has a hardness lower than the hardness of the bead filler 50 and rubber chafer 70. The hardness can be compared by using 100% modulus. The 100% modulus is a tensile stress of rubber stretched by 100%. Preferably, the 100% modulus of the soft rubber member 60 is less than one third of the 100% modulus of the rubber chafer 70.

The rubber chafer 70 enhances the rigidity of the bead portion 3. The rubber chafer 70 reduces abrasion due to friction between the tire and rim flange during drive. The rubber chafers70 is in contact with the rim flanges 210. The rubber chafer 70 is positioned to the outside of the carcass layer 20 and soft rubber member 60 in the tread width direction twd. The rubber chafer 70 is exposed in the outer surface of the tire 1. In other words, the rubber chafer 70 is positioned at the outermost position of the bead portion 3. The rubber chafer 70 includes a rim line. The rubber chafer 70 includes a rubber chafer outer end 75a which is the outer end thereof in the tire radial direction trd. The rubber chafer outer end 75a is in contact with the carcass body portion 30.

The bead filler outer end 55a and carcass outer end 45a are positioned to the inside of the rim flange ridge 215 in the tire radial direction trd. The rubber chafer outer end 75a is positioned to the outside of the rim flange ridge 215 in the tire radial direction trd.

The carcass outer end 45a is positioned to the inside of the soft rubber outer end 65a and to the outside of the soft rubber inner end 65b in the tire radial direction trd.

In this embodiment, the soft rubber outer end 65a is positioned to the inside of the rim flange ridge 215 in the tire radial direction trd. Moreover, the soft rubber inner end 65b is positioned to the outside of the bead filler outer end 55a in the tire radial direction trd.

As described above, the soft rubber outer end 65a is positioned to the inside of the rim flange ridge 215 in the tire radial direction trd and is positioned to the outside of the bead filler outer end 55a in the tire radial direction trd. Herein, it is preferable that the soft rubber member 60 is positioned between the bead filler outer end 55a and the rim flange ridge 215. To be specific, the soft rubber member 60 preferably intersects a line connecting the bead filler outer end 55a and the rim flange ridge 215.

The soft rubber member 60 is positioned between the bead filler outer end 55a and rim flange ridge 215 in this manner, so that the stress concentration can be reduced by the soft rubber member 60 even when the bead filler outer end 55a strains .

Moreover, the soft rubber member 60 may be provided along the bead filler 50. This can further reduce the strain of the bead filler outer end 55a. The soft rubber member 60 can thus reduce the stress concentration.

### (2) Operational Effect

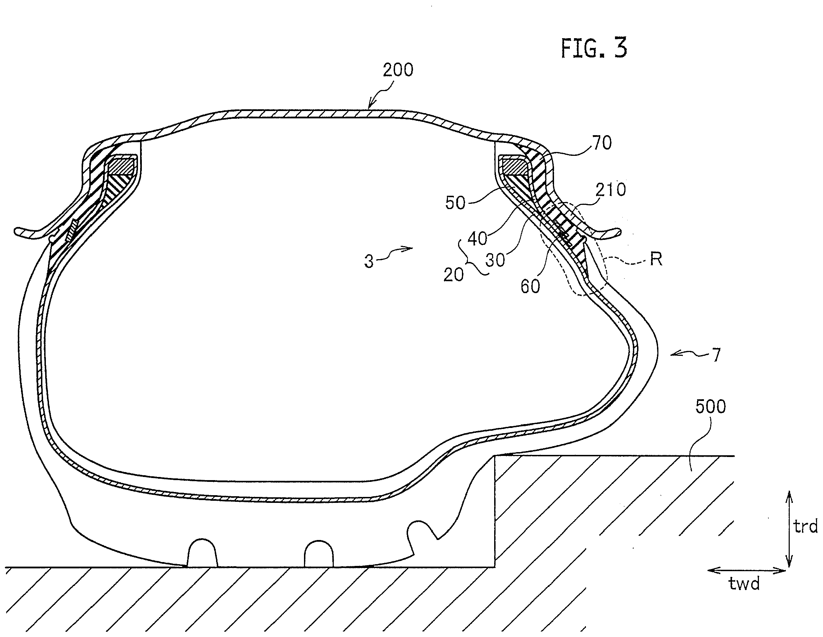

The operational effects according to the embodiment are described with reference to Fig. 3. Fig. 3 is an explanatory view illustrating the state where the tire 1 is driven over the curb 500.

As illustrated in Fig. 3, when the tire 1 is driven over the curb 500, the sidewall portion 7 deforms as much as the height thereof. Thereafter, the sidewall portion 7 tries to be restored to the original shape because of the elasticity of the sidewall portion 7. In this process, strain is more likely to be concentrated to region R which extends from the portion where the bead portion 3 is in contact with the rim flange 210 outward in the tire radial direction trd.

According to the embodiment, the rubber chafer outer end 75a is positioned to the outside of the rim flange ridge 215 in the tire radial direction trd. This can reduce strain caused in the region R, thus reducing occurrences of pinch cut.

Moreover, the soft rubber member 60 is positioned between the carcass outer end 45a and rubber chafer 70 and has a hardness lower than those of the bead filler 50 and rubber chafer 70. The soft rubber member 60 therefore serves as a buffer and can reduce stress concentration due to strain to the carcass layer 20. Accordingly, occurrences of pinch cut can be reduced.

In addition, it is possible to reduce the stress concentration acting on the carcass outer end 45a and therefore reduce separation starting from the carcass outer end 45a.

According to the embodiment, the bead filler outer end 55a and carcass outer end 45a are positioned to the inside of the rim flange ridge 215 in the tire radial direction trd. This can reduce the amount of materials used in the tire 1. It is therefore possible to reduce the weight of the tire 1 and save resources.

By positioning the bead filler outer end 55a and carcass outer end 45a to the inside of the rim flange ridge 215 in the tire radial direction trd, the ride comfort can be improved.

In this embodiment, the 100% modulus of the soft rubber member 60 is preferably not more than one third of that of the rubber chafer 70. This can further reduce the stress concentration acting on the carcass outer end 45a.

In this embodiment, the soft rubber outer end 65a is positioned to the inside of the rim flange ridge 215 in the tire radial direction trd. Moreover, the soft rubber inner end 65b is positioned to the outside of the bead filler outer end 55a in the tire radial direction trd. This allows the soft rubber member 60 to be positioned at an appropriate position and further save resources.

In this embodiment, the thickness of each sidewall portion 7 is preferably not more than 2.5 mm at the position of the tire maximum width TW. This can reduce the weight of the material constituting the sidewall portion 7, thus further saving resources.

### (3) Comparative Evaluation

In order to confirm the effectiveness of the tire according to the present invention, the tire weight, pinch-cut resistance, and separation resistance are evaluated using tires shown below. Herein, the present invention is not limited to the following examples.

At the measurement of the aforementioned performances, the tires according to Example and Comparative examples (shown in Table 1) are used. The tire size thereof is 175/70 R14, the rim size is 14-5.5 J, and the internal pressure is 210 kPa.

**Table 1**

| | Comparative example 1 | Comparative example 2 | Example |
|---|---|---|---|
| Position of carcass outer end (mm) | 40 | -5 | -5 |
| Position of bead filler outer end (mm) | 20 | -10 | -10 |
| Soft rubber member | Not provided | Not provided | provided |
| Tire weight | 100 | 96 | 95 |
| Pinch-cut resistance | 100 | 96 | 100 |
| Separation resistance | - | 40 | 150 |
| Ride comfort | 100 | 105 | 105 |

The "Position of carcass outer end (mm)" shown in Table 1 indicates the position of the carcass outer end in the tire radial direction with respect to the rim flange ridge. When the "Position of the carcass outer end (mm)" has a positive value, the carcass outer end is positioned to the outside of the rim flange ridge in the tire radial direction, and when the "Position of the carcass outer end (mm)" has a negative value, the carcass outer end is positioned to the inside of the rim flange ridge in the tire radial direction. The same goes for the "Position of bead filler outer end (mm)". The rubber chafer outer end of each tire is positioned at the same position with respect to the rim flange ridge.

As the tire according to Example, a tire illustrated in Figs. 1 and 2 is used. The tire according to Example includes the soft rubber member. The 100% modulus of the rubber chafer is 6 MPa, and the 100% modulus of the soft rubber member is 2 MPa.

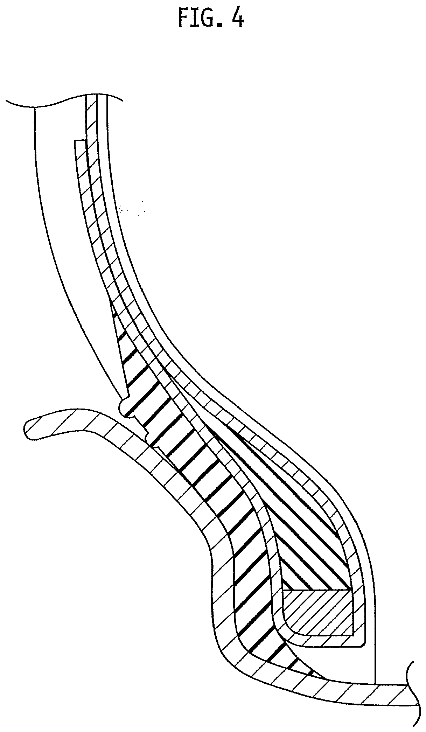

As the tire according to Comparative example 1, a tire illustrated in Fig. 4 is used. As shown in Table 1, the difference from Example is that the carcass outer end and bead filler outer end are positioned to the outside of the rim flange ridge in the tire radial direction. The tire according to Comparative example 1 does not include the soft rubber member.

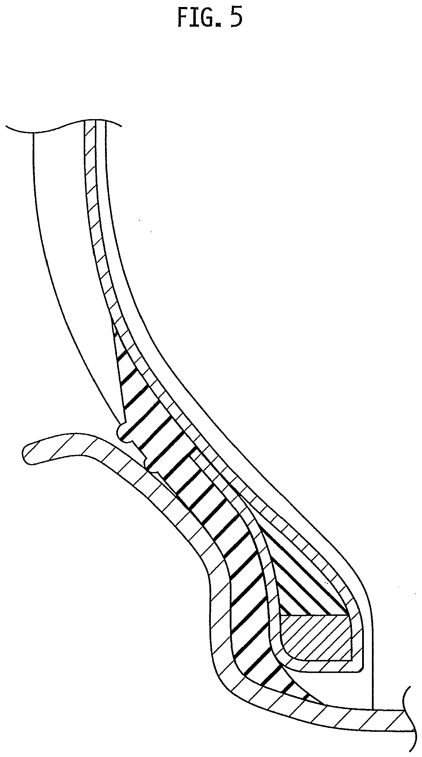

As the tire according to Comparative example 2, a tire illustrated in Fig. 5 is used. The difference from Example is that the tire according to Comparative example 2 does not include the soft rubber member.

The tire weight, pinch-cut resistance, separation resistance, and ride comfort of the aforementioned tires are measured. The performances of the tires of Example and Comparative Example 2 are shown by index numbers based on Comparative Example 1. The larger the index number, the greater the performance. To be specific, the larger the numeric value of the tire weight, the larger the tire weight. The larger the numeric value of the pinch-cut resistance, the higher the pinch-cut resistance. The same goes for the other performances.

As shown in Table 1, the tire of Example is reduced in weight and retains the pinch-cut resistance. Moreover, the separation resistance of Example is considerably higher than that of Comparative example 2. The ride comfort thereof is higher than that of Comparative example 1.

It is thus confirmed that it is possible to save resources and reduce occurrences of pinch cut and separation starting from the carcass layer according to the present invention.

### (Other Embodiments)

The contents of the present invention are disclosed through the embodiment of the present invention hereinabove, but it should not be understood that the present invention is limited by the description and drawings constituting a part of the disclosure. The present invention includes various embodiments not described herein.

For example, the tire according to the present invention may be either a pneumatic tire or a tire filled with rubber. The tire according to the present invention may be also a tire filled with gas other than air, that is, a tire which is filled with rare gas such as argon.

As described above, the present invention includes various embodiments not described herein. Accordingly, the technical scope of the present invention is determined only by the features according to the claims which are proper from the above description.

The entire contents of Japanese Patent Application Publication No. 2012-056964 (filed on 14 March 2012) are incorporated in this specification by reference.

### INDUSTRIAL APPLICABILITY

According to the present invention, it is possible to provide a tire with occurrences of pinch cut and separation starting from ends of the carcass layer reduced while saving resources.

## Claims

1. A tire/rim assembly, the tire (1) comprising:
a pair of bead cores (10);
a carcass layer (20) having a toroidal shape laid between the pair of bead cores;
a bead filler (50) extending from at least one of the bead cores in a tire radial direction (trd);
a rubber chafer (70) which comes into contact with a rim flange (210), the carcass layer including a carcass body portion (30) laid between the pair of bead cores and carcass folded-back portions (40) turned back outward in a tread width direction around the pair of bead cores, wherein
the carcass folded-back portion includes a carcass outer end (45a) which is an outer end thereof in the tire radial direction,
the bead filler includes a bead filler outer end (55a) which is an outer end thereof in the tire radial direction,
the rubber chafer includes a rubber chafer outer end (75a) which is an outer end thereof in the tire radial direction,
the rim flange includes a rim flange ridge (215) at the outermost position in the tire radial direction,
the bead filler outer end and the carcass outer end are positioned to the inside of the rim flange ridge in the tire radial direction,
the rubber chafer outer end is positioned to the outside of the rim flange ridge in the tire radial direction,
a soft rubber member (60) is provided between the carcass outer end and the rubber chafer, **characterised in that**:
the soft rubber member has a hardness lower than those of the bead filler and the rubber chafer, **in that** an outer end (65a) of the soft rubber member in the tire radial direction is positioned to the inside of the rim flange ridge in the tire radial direction, and **in that**
an inner end (65b) of the soft rubber member in the tire radial direction is positioned to the outside, in the tire radial direction, of the bead filler outer end in the tire radial direction.

2. The tire/rim assembly according to claim 1, the soft rubber member is positioned between the bead filler outer end in the tire radial direction and the rim flange ridge.

3. The tire/rim assembly according to claim 1 or 2, wherein the soft rubber member has a 100% modulus not more than one third of that of the rubber chafer.

4. The tire/rim assembly according to any one of claims 1 to 3, further comprising a sidewall portion (7) forming a side face of the tire, wherein the sidewall portion has a thickness of not more than 2.5 mm at a tire maximum width position in the tread width direction (twd).

## Patentansprüche

1. Reifen-Felge-Baugruppe, wobei der Reifen (1) Folgendes umfasst:
ein Paar von Wulstkernen (10),
eine Karkassenlage (20), die eine kreisringförmige Gestalt aufweist, die zwischen das Paar von Wulstkernen gelegt ist,
einen Kernreiter (50), der sich von wenigstens einem der Wulstkerne in einer Reifenradialrichtung (trd) erstreckt,
ein Gummi-Wulstschutzband (70), das in Berührung mit einem Felgenflansch (210) kommt, wobei die Karkassenlage einen Karkassenkörperabschnitt (30), der zwischen das Paar von Wulstkernen gelegt ist, und Karkassenumschlagabschnitte (40), die in einer Laufflächenbreitenrichtung um das Paar von Wulstkernen nach außen zurückgeschlagen sind, einschließt, wobei
der Karkassenumschlagabschnitt ein Karkassen-Außenende (45a) einschließt, das ein äußeres Ende desselben in der Reifenradialrichtung ist,
der Kernreiter ein Kernreiter-Außenende (55a) einschließt, das ein äußeres Ende desselben in der Reifenradialrichtung ist,
das Gummi-Wulstschutzband ein Gummi-Wulstschutzband-Außenende (75a) einschließt, das ein äußeres Ende desselben in der Reifenradialrichtung ist,
der Felgenflansch einen Felgenflanschsteg (215) an der äußersten Position in der Reifenradialrichtung einschließt,
das Kernreiter-Außenende und das Karkassen-Außenende zur Innenseite des Felgenflanschstegs in der Reifenradialrichtung angeordnet sind,
das Gummi-Wulstschutzband-Außenende zur Außenseite des Felgenflanschstegs in der Reifenradialrichtung angeordnet ist,
ein Weichgummielement (60), das zwischen dem Karkassen-Außenende und dem Gummi-Wulstschutzband bereitgestellt wird, **dadurch gekennzeichnet, dass**
das Weichgummielement eine Härte aufweist, die geringer ist als diejenige des Kernreiters und des Gummi-Wulstschutzbandes, dadurch, dass ein äußeres Ende (65a) des Weichgummielements in der Reifenradialrichtung zur Innenseite des Felgenflanschstegs in der Reifenradialrichtung angeordnet ist, und dadurch, dass
ein inneres Ende (65b) des Weichgummielements in der Reifenradialrichtung zur Außenseite, in der Reifenradialrichtung, des Kernreiter-Außenendes in der Reifenradialrichtung angeordnet ist.

2. Reifen-Felge-Baugruppe nach Anspruch 1, wobei das Weichgummielement zwischen dem Kernreiter-Außenende in der Reifenradialrichtung und dem Felgenflanschsteg angeordnet ist.

3. Reifen-Felge-Baugruppe nach Anspruch 1 oder 2, wobei das Weichgummielement einen 100%-Modul von nicht mehr als ein Drittel desjenigen des Gummi-Wulstschutzbandes aufweist.

4. Reifen-Felge-Baugruppe nach einem der Ansprüche 1 bis 3, die ferner einen Seitenwandabschnitt (7) umfasst, der eine Seitenfläche des Reifens bildet, wobei der Seitenwandabschnitt eine Dicke von nicht mehr als 2,5 mm an einer Position maximaler Reifenbreite in der Laufflächenbreitenrichtung (twd) aufweist.

## Revendications

1. Assemblage de bandage pneumatique/jante, le bandage pneumatique (1) comprenant :
une paire de tringles (10) ;
une nappe de carcasse (20) ayant une forme toroïdale, agencée entre la paire de tringles ;
un bourrage sur tringle (50) s'étendant à partir d'au moins une des tringles dans une direction radiale du bandage pneumatique (trd) ;
une bandelette talon en caoutchouc (70), entrant en contact avec un rebord de jante (210), la nappe de carcasse incluant une partie de corps de carcasse (30) agencée entre la paire de tringles et des parties repliées vers l'arrière de la carcasse (40) repliées vers l'arrière et vers l'extérieur, dans une direction de la largeur de la bande de roulement, autour de la paire de tringles ; dans lequel :
la partie repliée vers l'arrière de la carcasse inclut une extrémité externe de la carcasse (45a) constituant une extrémité externe de celle-ci dans la direction radiale du bandage pneumatique ;
le bourrage sur tringle inclut une extrémité externe du bourrage sur tringle (55a), constituant une extrémité externe de celui-ci dans une direction radiale du bandage pneumatique ;
la bandelette talon en caoutchouc inclut une extrémité externe de la bandelette talon en caoutchouc (75a) constituant une extrémité externe de celle-ci dans la direction radiale du bandage pneumatique ;
le rebord de jante inclut une nervure du rebord de jante (215) au niveau de la partie externe extrême dans la direction radiale du bandage pneumatique ;
l'extrémité externe du bourrage sur tringle et l'extrémité externe de la carcasse sont positionnées vers l'intérieur de la nervure du rebord de jante dans la direction radiale du bandage pneumatique ;
l'extrémité externe de la bandelette talon en caoutchouc est positionnée vers l'extérieur de la nervure du rebord de jante, dans la direction radiale du bandage pneumatique ;
un élément en caoutchouc mou (60) est agencé entre l'extrémité externe de la carcasse et la bandelette talon en caoutchouc, **caractérisé en ce que** :
l'élément en caoutchouc mou présente une dureté inférieure à celles du bourrage sur tringle et de la bandelette talon en caoutchouc, **en ce qu'**une extrémité externe (65a) de l'élément en caoutchouc mou, dans la direction radiale du bandage pneumatique, est positionnée vers l'intérieur de la nervure du rebord de jante, dans la direction radiale du bandage pneumatique ; et **en ce que** :
une extrémité interne (65b) de l'élément en caoutchouc mou, dans la direction radiale du bandage pneumatique, est positionnée vers l'extérieur, dans la direction radiale du bandage pneumatique, de l'extrémité externe du bourrage sur tringle, dans la direction radiale du bandage pneumatique.

2. Assemblage de bandage pneumatique/jante selon la revendication 1, dans lequel l'élément en caoutchouc mou est positionné entre l'extrémité externe du bourrage sur tringle, dans la direction radiale du bandage pneumatique, et la nervure du rebord de jante.

3. Assemblage de bandage pneumatique/jante selon les revendications 1 ou 2, dans lequel l'élément en caoutchouc mou présente un module à 100% représentant pas plus d'un tiers de celui de la bandelette talon en caoutchouc.

4. Assemblage de bandage pneumatique/jante selon l'une quelconque des revendications 1 à 3, comprenant en outre une partie de flanc (7) formant une face latérale du bandage pneumatique, dans lequel la partie de flanc a une épaisseur non supérieure à 2,5 mm au niveau d'une position à largeur maximale du bandage pneumatique, dans la direction de la largeur de la bande de roulement (twd).
